# FASCICULE DE BREVET EUROPEEN

(11) **EP 3 135 023 B1**
(45) Date de publication et mention de la délivrance du brevet: **12.09.2018**
(21) Numéro de dépôt: 15719417.6
(22) Date de dépôt: 10.04.2015
(51) Int. Cl.: H04M 1/2745

(54) **PROCÉDÉ POUR ACCÉDER Á UN RÉPERTOIRE PARTAGÉ DANS UNE PASSERELLE INTERNET**
VERFAHREN ZUM ZUGRIFF AUF EIN GETEILTES VERZEICHNIS IN EINEM INTERNETGATEWAY
METHOD FOR ACCESSING A SHARED DIRECTORY IN AN INTERNET GATEWAY

(30) Priorité: 22.04.2014 FR 1453582
(43) Date de publication de la demande: 01.03.2017
(73) Titulaire: Softathome, 92700 Colombes (FR)
(72) Inventeur: PHILIPPE, Antoine, F-92400 Courbevoie (FR)
(74) Mandataire: IPAZ
(86) Numéro de dépôt international: PCT/EP2015/057798
(87) Numéro de publication internationale: WO 2015/162018

(56) Documents cités:
- FR-A1- 2 895 199
- US-A- 5 727 046

## Description

La présente invention concerne les passerelles internet et plus particulièrement le contrôle à distance de l'affichage du répertoire de contacts partagé d'une passerelle internet.

Les passerelles internet sont utilisées pour de nombreux usages et notamment pour la VoIP. Grâce à cette technologie, un utilisateur peut communiquer à distance avec un autre. Pour ce faire et avec un téléphone filaire classique, il faut soit composer le numéro du correspondant sur les touches du téléphone soit le numéro est déjà enregistré dans le répertoire et est composé si une touche spécifique est appuyée. Dans tous les cas, des tonalités DTMF sont envoyées sur la ligne téléphonique. Les tonalités DTMF sont composées de deux fréquences caractéristiques qui permettent d'identifier un chiffre unique de 0 à 9, les lettres A à D et les caractères spéciaux * et #. Les passerelles internet contiennent un récepteur de tonalités DTMF qui traduit ces tonalités DTMF reçues en un numéro qui est transmis dans un message sur le réseau VoIP. Les passerelles internet peuvent aussi être équipées de différents périphériques comme un écran qui permet d'avoir différentes informations sur la connexion et aussi désormais embarquer une base DECT CAT IQ 2.0. Cette dernière offre la possibilité d'avoir un répertoire de contacts partagé entre tous les téléphones DECT qui lui sont connectés. Contrairement au DECT, les téléphones filaires classiques utilisent un répertoire qui ne peut pas être synchronisé avec le répertoire partagé. Un nouveau contact enregistré sur le téléphone DECT CAT IQ 2.0 ne sera donc pas visible dans le répertoire du téléphone filaire.

On connait le document FR 2 895 199 A1 qui divulgue un dispositif formant répertoire téléphonique partagé comprenant (i) des moyens de communication sans fils apte à établir une connexion internet, (ii) un répertoire téléphonique personnel composé d'une pluralité de fiches de contact et disposant de moyens de connexion auxdits moyens de communication, (iii) des moyens de stockage des fiches de contact, (iv) des moyens pour mettre à disposition de chaque terminal les fiches de contact stockées dans les moyens de stockage, de manière à incorporer lesdites fiches de contact dans le répertoire téléphonique personnel de chaque terminal.

On connait par ailleurs le document US 5,727,046 qui divulgue un répertoire téléphonique électronique comprenant une ligne téléphonique interne et une mémoire contenant au moins un nom associé à un numéro de téléphone. Le dispositif divulgué permet d'une part un accès local ou à distance à ladite mémoire, et d'autre part de modifier les informations stockée.

Un but de l'invention est de rendre accessible le répertoire partagé d'une passerelle à un téléphone classique.

On atteint au moins l'un des objectifs précités avec un procédé pour accéder à un répertoire partagé de contacts présent dans une passerelle Internet à partir d'un téléphone. Selon l'invention, ce procédé comprend les étapes suivantes :
- réception dans la passerelle d'au moins une tonalité DTMF émise par le téléphone,
- déclenchement d'une fonctionnalité associée au répertoire au sein de la passerelle en réponse à la réception de ladite au moins une tonalité DTMF,
- affichage sur un écran de la passerelle d'une information suite au déclenchement de ladite fonctionnalité.

Concernant l'écran, il s'agit d'un écran intégré à la passerelle ou d'un écran permettant d'afficher des informations provenant de la passerelle.

Avec le procédé selon l'invention, on utilise les tonalités DTMF pour activer des fonctionnalités ou commandes de manipulation des contacts contenus dans le répertoire partagé de la passerelle Internet. Cette passerelle est de préférence prévue pour des communications via un réseau VOIP. Le répertoire est généralement conçu par et pour la technologie DECT de communication numérique. Le téléphone peut être connecté avec ou sans fil à la passerelle. Avantageusement, il peut s'agir d'un téléphone filaire, n'intégrant pas par exemple la technologie DECT de communication numérique. Avec l'invention, on peut alors accéder au répertoire contenu dans une passerelle Internet ou « set-top-box » à partir d'un téléphone n'ayant pas a priori la technologie nécessaire pour accéder à ce répertoire. Le téléphone doit au minimum être capable d'émettre des tonalités DTMF. Le téléphone joue le rôle d'une télécommande pour commander la passerelle à afficher le contenu du répertoire.

Par conséquent, n'importe quel téléphone relié à la passerelle peut accéder et bénéficier des contacts contenus dans le répertoire partagé.

Selon une caractéristique avantageuse de l'invention, ladite fonctionnalité peut comprendre la navigation au sein du répertoire. On peut ainsi explorer les différents contacts du répertoire et voir leur nom affiché sur l'écran. De façon générale, cette navigation peut être multidirectionnelle, comprendre une sélection ainsi qu'une commande « retour ».

Par exemple, l'écran peut changer d'affichage courant et afficher le contact, nom ou numéro, suivant dans le répertoire partagé. L'écran peut aussi changer d'affichage courant et afficher le contact précédent dans le répertoire partagé. Ce répertoire peut être un répertoire alphabétique mais peut également être de type différent tel que par exemple un répertoire de derniers numéros appelés, un répertoire de derniers appels reçus, un répertoire de derniers appels manqués, etc.

Selon un mode de mise en oeuvre avantageux de l'invention, la fonctionnalité peut comprendre en outre une sélection dans le répertoire partagé d'un contact affiché sur l'écran. Cette sélection peut se manifester par divers moyens comme par exemple la surbrillance du contact sélectionné sur l'écran d'affichage.

Avantageusement, la passerelle peut ensuite générer un message de signalisation VOIP contenant le contact sélectionné ou le numéro du contact sélectionné. Cela signifie que l'on déclenche un appel téléphonique d'un destinataire présent dans le répertoire partagé à partir d'un téléphone à tonalités DTMF.

Selon un autre aspect de l'invention, il est proposé une passerelle Internet permettant à un téléphone d'accéder à un répertoire partagé de contacts présent dans la passerelle Internet. Selon l'invention, la passerelle comprend :
- un module de réception DTMF pour recevoir au moins une tonalité DTMF apte à être émise par le téléphone,
- un module de contrôle de tonalité DTMF pour déclencher une fonctionnalité dans la passerelle en réponse à la réception d'une tonalité DTMF,
- une mémoire stockant le répertoire partagé,
- un module de contrôle de l'affichage d'un écran de la passerelle pour afficher des contacts contenus dans la mémoire suite au déclenchement d'une fonctionnalité,
- un module de contrôle de communication pour déclencher un appel sortant via un message de signalisation VOIP, et
- un microprocesseur pour gérer l'ensemble des modules.

Cette passerelle comprend de préférence une base DECT CAT IQ permettant d'avoir un répertoire partagé entre plusieurs téléphones à la norme DECT.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique illustrant la communication entre deux téléphones classiques A et B,
La figure 2 est une vue simplifiée de modules présents dans une passerelle selon l'invention,
La figure 3 est une vue simplifié d'un graphique de cheminement des étapes du procédé selon l'invention.

La présente invention résout le problème présenté dans l'état de l'art en fournissant une méthode de contrôle de l'affichage du répertoire de contacts partagé d'une passerelle internet sur un écran et de sélection du contact à appeler en réponse a une ou plusieurs tonalités DTMF. La présente invention permet à un utilisateur d'appeler quelqu'un se trouvant dans le répertoire partagé de la passerelle depuis n'importe quel téléphone filaire relié à la passerelle internet sans que ce contact n'ait été préalablement entré dans le répertoire du téléphone filaire.

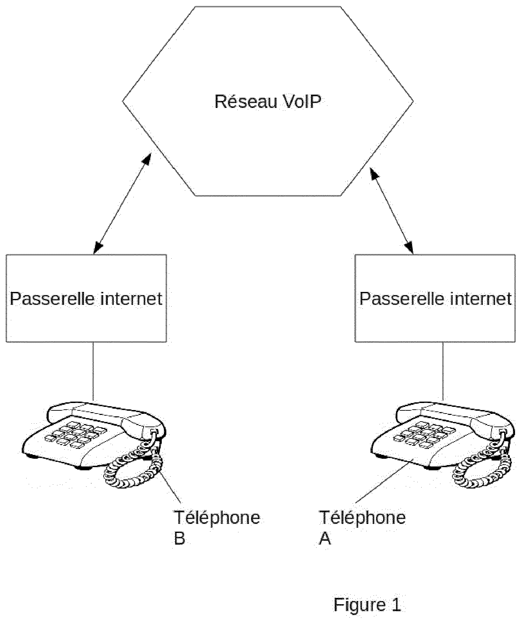

Un exemple de réseau qui illustre l'invention est présenté sur la figure 1. Un téléphone filaire dit Téléphone A est relié à la passerelle internet par le biais d'un câble RJ11. La passerelle internet est connectée au réseau VoIP. Un Téléphone B reliée à une autre passerelle internet peut communiquer avec le Téléphone A par le réseau VoIP.

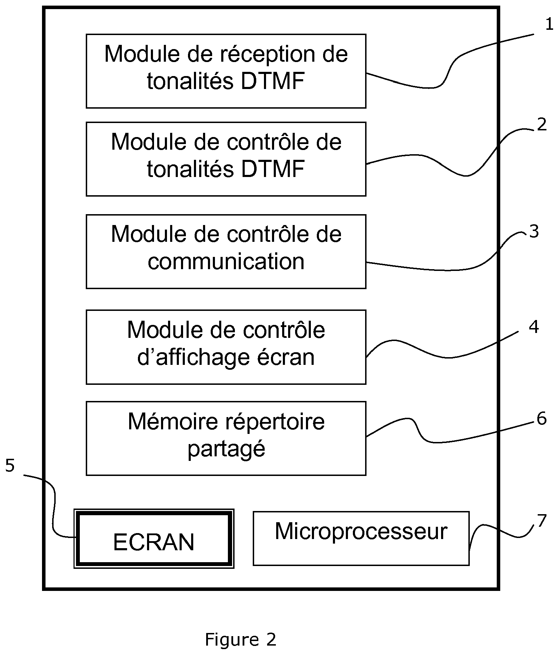

Une illustration des différents modules d'une passerelle internet est représentée en figure 2. Ces différents modules peuvent être mis en oeuvre sous forme de modules logiciels ou matériels configurés pour réaliser les étapes selon l'invention. On distingue un récepteur 1 de tonalités DTMF configuré pour mettre en oeuvre un algorithme de reconnaissance des tonalités DTMF par le biais d'un DSP. En sortie du DSP, si au moins une tonalité DTMF est détectée, elle est transmise au module 2 de contrôle de tonalité DTMF.

Ce dernier accepte les tonalités DTMF reçues du récepteur de DTMF et détermine si la tonalité DTMF détectée est une commande valide qui doit faire l'objet d'une action caractéristique sur la passerelle internet. La mémoire 6 contient le répertoire partagé. Il s'agit de préférence de numéros de téléphone associés à des contacts (noms de personnes physiques ou morales). Le module 3 de contrôle de communication permet de déclencher un appel sortant via un message de signalisation VoIP. Le module 4 de contrôle d'affichage permet de contrôler l'affichage du répertoire partagé sur un écran 5. L'utilisateur peut ainsi visualiser sur cet écran 5 le défilement de contacts en réponse à des appuis de touches sur le téléphone. A titre d'exemples non limitatifs, les touches du téléphone peuvent être associées à des actions de navigation telles que décrites ci-après. Une touche de téléphone peut être affectée à l'action de navigation vers la gauche (ou le haut). Une autre touche de téléphone peut être affectée à l'action de navigation vers la droite (ou le bas). Une autre touche de téléphone peut être affectée à l'action de sélectionner un contact. L'homme du métier comprendra aisément que la navigation dans le répertoire peut comprendre des commandes multidirectionnelles, une sélection et un « retour ».

L'écran 5 d'affichage peut faire partie intégrante de la passerelle mais il peut aussi être déporté ou être un téléviseur connecté à la passerelle. Le microprocesseur 7 gère les différents modules, la mémoire 6 et l'écran 5.

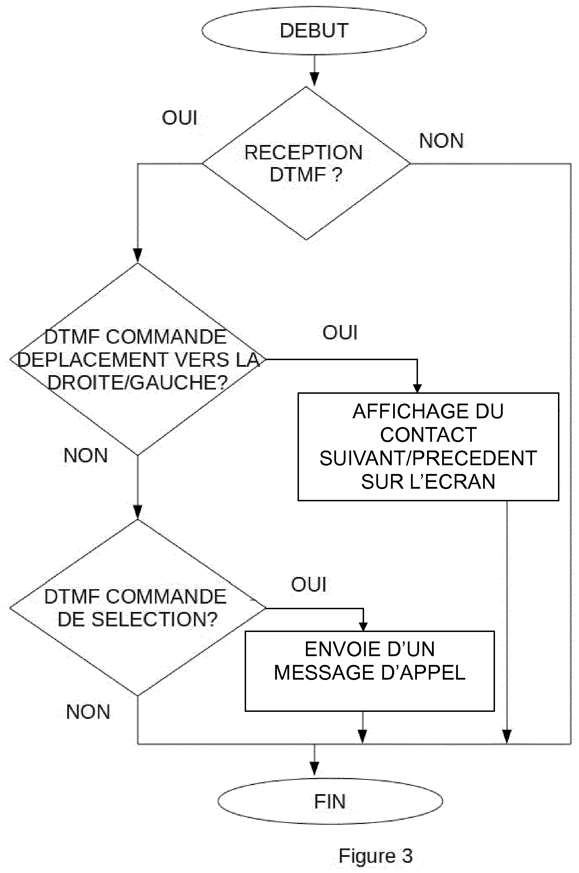

Bien que l'invention n'y soit pas limitée, et pour de raison de clarté, on va maintenant décrire sur la figure 3 un procédé de contrôle de commande DTMF mettant en oeuvre des commandes droite, gauche et sélection. De la même manière tout répertoire, autre qu'alphabétique décrit ci-après, peut être utilisé. Si le module 2 de contrôle de tonalité DTMF associe une tonalité à l'une des commandes suivantes :
- se déplacer vers la droite
- se déplacer vers la gauche
- sélectionner
ce module 2 communique l'information au module 4 de contrôle d'affichage qui traite l'opération.

Lorsque le module 4 de contrôle d'affichage réceptionne la commande «Se Déplacer vers la droite», le contact a afficher est celui d'après dans la liste alphabétique. L'écran est mis à jour suivant cette dernière instruction. Si le module 4 de contrôle d'affichage réceptionne la commande «Se Déplacer vers la gauche», le contact à afficher est celui d'avant dans la liste alphabétique. L'écran est mis à jour suivant cette dernière instruction. Dans le cas ou plusieurs noms apparaissent sur l'écran, la sélection du nom courant est marquée par de la surbrillance ou des lettres affichées en gras. Si une commande « sélectionner » a été identifiée par le module 2 de contrôle de tonalité DTMF, cette commande est transmise directement et/ou via le module 4 de contrôle d'affichage vers le module 3 de contrôle de communication.

Ce dernier envoie un message de signalisation VoIP contenant le numéro du contact sélectionné de façon à déclencher un appel téléphonique.

D'une façon générale, dans la présente invention, la passerelle internet est donc équipée d'un récepteur DTMF qui permet la réception d'au moins une tonalité DTMF. La passerelle internet est aussi équipée d'un module de contrôle de tonalité DTMF qui permet de faire correspondre a au moins une tonalité DTMF identifiée une opération sur la passerelle internet et ses périphériques.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour accéder à un répertoire partagé de contacts présent dans une passerelle Internet à partir d'un téléphone (A), comprenand étapes suivantes :
- réception dans la passerelle d'au moins une tonalité DTMF émise par le téléphone (A),
- déclenchement d'une fonctionnalité associée au répertoire au sein de la passerelle en réponse à la réception de ladite au moins une tonalité DTMF,
- affichage sur un écran (5) de la passerelle d'une information suite au déclenchement de ladite fonctionnalité.

2. Procédé selon la revendication 1, **caractérisé en ce que** la fonctionnalité comprend la navigation au sein du répertoire (6).

3. Procédé selon la revendication 2, **caractérisé par le fait que** l'écran (5) change d'affichage courant et affiche le contact suivant dans le répertoire partagé (6).

4. Procédé selon revendication 2, **caractérisé par le fait que** l'écran (5) change d'affichage courant et affiche le contact précédent dans le répertoire partagé (6).

5. Procédé selon l'une quelconque des revendications précédentes, **caractérisé en ce que** la fonctionnalité comprend en outre une sélection dans le répertoire partagé (6) d'un contact affiché sur l'écran (5).

6. Procédé selon la revendication 5, **caractérisé en ce que** la passerelle génère un message de signalisation VOIP contenant le contact sélectionné ou le numéro du contact sélectionné.

7. Procédé selon l'une quelconque des revendications précédentes, **caractérisé en ce que** le téléphone est un téléphone filaire.

8. Passerelle Internet permettant à un téléphone d'accéder à un répertoire partagé de contacts (6) présent dans la passerelle Internet, comprenand:
- un module de réception DTMF (1) pour recevoir au moins une tonalité DTMF apte à être émise par le téléphone,
- un module de contrôle de tonalité DTMF (2) pour déclencher une fonctionnalité dans la passerelle en réponse à la réception d'une tonalité DTMF,
- une mémoire stockant le répertoire partagé (6),
- un module de contrôle de l'affichage (4) d'un écran de la passerelle pour afficher des contacts contenus dans la mémoire suite au déclenchement d'une fonctionnalité,
- un module de contrôle de communication (3) pour déclencher un appel sortant via un message de signalisation VOIP, et
- un microprocesseur (7) pour gérer l'ensemble des modules.

9. Passerelle Internet selon la revendication 8, **caractérisé en ce qu'**elle comprend en outre une base DECT CAT IQ.

## Patentansprüche

1. Verfahren zum Zugriff auf ein freigegebenes Verzeichnis von Kontakten, das in einem Internet-Gateway vorhanden ist, ausgehend von einem Telefon (A), umfassend die nachfolgenden Schritte:
- Empfangen von mindestens einem DTMF-Ton, der von dem Telefon (A) ausgegeben wird, in dem Gateway,
- Auslösen einer dem Verzeichnis innerhalb des Gateways zugeordneten Funktion als Antwort auf den Empfang des mindestens einen DTMF-Tons,
- Anzeigen einer Information auf einem Bildschirm (5) des Gateways nach dem Auslösen der Funktion.

2. Verfahren nach Anspruch 1, **dadurch gekennzeichnet, dass** die Funktion die Navigation innerhalb des Verzeichnisses (6) umfasst.

3. Verfahren nach Anspruch 2, **dadurch gekennzeichnet, dass** der Bildschirm (5) die aktuelle Anzeige wechselt und den nächsten Kontakt im freigegebenen Verzeichnis (6) anzeigt.

4. Verfahren nach Anspruch 2, **dadurch gekennzeichnet, dass** der Bildschirm die aktuelle Anzeige wechselt und den vorherigen Kontakt im freigegebenen Verzeichnis (6) anzeigt.

5. Verfahren nach einem der vorangehenden Ansprüche, **dadurch gekennzeichnet, dass** die Funktion ferner eine Auswahl eines Kontakts aus dem freigegebenen Verzeichnis (6) umfasst, der auf dem Bildschirm (5) angezeigt wird.

6. Verfahren nach Anspruch 5, **dadurch gekennzeichnet, dass** das Gateway eine VOIP-Signalisierungsnachricht erzeugt, die den ausgewählten Kontakt oder die Nummer des ausgewählten Kontakts enthält.

7. Verfahren nach einem der vorangehenden Ansprüche, **dadurch gekennzeichnet, dass** das Telefon ein kabelgebundenes Telefon ist.

8. Internet-Gateway, das einem Telefon ermöglicht, auf ein freigegebenes Verzeichnis von Kontakten (6) zuzugreifen, das in dem Internet-Gateway vorhanden ist, enthaltend:
- ein DTMF-Empfangsmodul (1) zum Empfangen von mindestens einem DTMF-Ton, der von dem Telefon ausgegeben werden kann,
- ein DTMF-Ton-Kontrollmodul (2) zum Auslösen einer Funktion in dem Gateway als Antwort auf den Empfang eines DTMF-Tons,
- einen Speicher, in dem das freigegebene Verzeichnis (6) abgelegt ist,
- ein Modul zur Kontrolle der Anzeige (4) eines Bildschirms des Gateways zum Anzeigen der in dem Speicher enthaltenden Kontakte nach Auslösen einer Funktion,
- ein Kommunikationskontrollmodul (3) zum Auslösen eines Anrufs, der über eine VOIP-Signalisierungsnachricht ausgeht, und
- einen Mikroprozessor (7) zum Verwalten der gesamten Module.

9. Internet-Gateway nach Anspruch 8, **dadurch gekennzeichnet, dass** es ferner eine DECT CAT IQ - Basis enthält.

## Claims

1. Method for accessing a shared directory of contacts present in an Internet gateway from a telephone (A), comprising the following steps:
- receiving, in the gateway, at least one DTMF tone transmitted by the telephone (A),
- activating a functionality associated with the directory within the gateway in response to receiving said at least one DTMF tone,
- displaying an item of data on a screen (5) of the gateway following activation of said functionality.

2. Method according to claim 1, **characterized in that** the functionality comprises browsing in the directory (6).

3. Method according to claim 2, **characterized by** the fact that the screen (5) changes the current display and displays the next contact in the shared directory (6).

4. Method according to claim 2, **characterized by** the fact that the screen (5) changes the current display and displays the previous contact in the shared directory (6).

5. Method according to any one of the preceding claims, **characterized in that** the functionality also comprises a selection in the shared directory (6) of a contact displayed on the screen (5).

6. Method according to claim 5, **characterized in that** the gateway generates a VOIP signalling message containing the selected contact or the number of the selected contact.

7. Method according to any one of the preceding claims, **characterized in that** the telephone is a fixed telephone.

8. Internet gateway making it possible for a telephone to access a shared directory of contacts (6) present in the Internet gateway, comprising:
- a DTMF reception module (1) for receiving at least one DTMF tone capable of being transmitted by the telephone,
- a DTMF tone control module (2) for activating a functionality in the gateway in response to the reception of a DTMF tone,
- a memory storing the shared directory (6),
- a display control module (4) for a screen of the gateway for displaying contacts contained in the memory following the activation of a functionality,
- a communication control module (3) for activating an outgoing call via a VOIP signalling message, and
- a microprocessor (7) for managing all of the modules.

9. Internet gateway according to claim 8, **characterized in that** it also comprises a DECT CAT-iq base.
